# EUROPEAN PATENT APPLICATION

(11) **EP 3 594 581 A2**
(43) Date of publication of application: **15.01.2020**
(21) Application number: 19185296.1
(22) Date of filing: 09.07.2019
(51) Int. Cl.: F24F 11/63, F24F 11/52

(54) **CONTROL DEVICE, CONTROL SYSTEM, CONTROL METHOD, AND PROGRAM**

(30) Priority: 13.07.2018 JP 2018133368
(71) Applicant: MITSUBISHI HEAVY INDUSTRIES THERMAL SYSTEMS, LTD., 108-8215 Tokyo (JP)
(72) Inventor: Masutani, Akihiro, Tokyo, 108-8215 (JP); Yoshida, Kenji, Tokyo, 108-8215 (JP)
(74) Representative: Henkel & Partner mbB

(57) **Abstract**

A control device includes a model information acquisition unit configured to acquire model information indicating an air conditioner, a space information acquisition unit configured to acquire space information related to a space in which the air conditioner indicated by the model information is to be installed, a first model parameter specification unit configured to specify a first model parameter related to the air conditioner indicated by the model information, a second model parameter specification unit configured to specify a second model parameter related to the space, a calculation unit configured to calculate a wind direction in the space of air blown by the air conditioner indicated by the model information, a region in the space to which the air reaches, and a temperature in the region on the basis of the first model parameter and the second model parameter, and a display control unit configured to cause a display unit to display at least one of the wind direction, the region, and the temperature on the basis of a calculation result of the calculation unit.

## Description

### BACKGROUND OF THE INVENTION

### Field of the Invention

The present invention relates to a control device, a control system, a control method, and a program.

### Description of Related Art

A plurality of types of air conditioners are manufactured under an assumption of various spaces (for example, for spaces of different sizes) in which the air conditioners are to be installed.

Japanese Unexamined Patent Application, First Publication No. 2011-257071 (hereinafter, referred to as Patent Literature 1) discloses related art. As a related technique, Patent Literature 1 describes a technique related to display of air flow in a space of air blown by an air conditioner installed in the space.

### SUMMARY OF THE INVENTION

Incidentally, when selecting an air conditioner to be installed in a space, there is a requirement to select an air conditioner suitable for the space. Therefore, there is a need for a technique capable of selecting an air conditioner suitable for a space before actually installing the air conditioner.

An object of the present invention is to provide a control device, a control system, a control method, and a program capable of solving the above-described problems.

According to a first aspect of the present invention, a control device includes a model information acquisition unit configured to acquire model information of an air conditioner, a space information acquisition unit configured to acquire space information related to a space in which the air conditioner indicated by the model information is to be installed, a first model parameter specification unit configured to specify a first model parameter related to the air conditioner indicated by the model information, a second model parameter specification unit configured to specify a second model parameter related to the space, a calculation unit configured to calculate a wind direction in the space of air blown by the air conditioner indicated by the model information, a region in the space to which the air reaches, and a temperature in the region on the basis of the first model parameter and the second model parameter, and a display control unit configured to cause a display unit to display at least one of the wind direction, the region, and the temperature on the basis of a calculation result of the calculation unit.

According to a second of the present invention, in the control device according to the first aspect, the display control unit may cause the display unit to display at least one of the wind direction, the region, and the temperature together with the photographed space.

According to a third aspect of the present invention, in the control device according to the first or second aspect, after the air conditioner is installed in the space, the model information acquisition unit may acquire the model information of the installed air conditioner, the first model parameter specification unit may specify the first model parameter of the installed air conditioner, the calculation unit may calculate the wind direction, the region, and the temperature on the basis of setting information related to an air blast set to the installed air conditioner, the first model parameter related to the installed air conditioner, and the second model parameter, and the display control unit may cause the display unit to display at least one of the wind direction, the region, and the temperature on the basis of the calculation result of the calculation unit.

According to a fourth aspect of the present invention, a control system includes the control device of any one of the first to third aspects, and a terminal device having the display unit.

According to a fifth aspect of the present invention, in the control system according to the fourth aspect, the terminal device may include an operation unit configured to receive an input of the model information and the space information, the model information acquisition unit may acquire the model information received by the operation unit, and the space information acquisition unit may acquire the space information received by the operation unit.

According to a sixth aspect of the present invention, in the control system according to the fifth aspect, after the air conditioner is installed in the space, the operation unit may receive an input of the setting information related to the air blast set to the installed air conditioner, and the calculation unit may calculate the wind direction, the region, and the temperature on the basis of the setting information received by the operation unit, the first model parameter related to the installed air conditioner, and the second model parameter.

According to a seventh aspect of the present invention, a control method includes acquiring model information of an air conditioner, acquiring space information related to a space in which the air conditioner indicated by the model information is to be installed, specifying a first model parameter related to the air conditioner indicated by the model information, specifying a second model parameter related to the space, calculating a wind direction in the space of air blown by the air conditioner indicated by the model information, a region in the space to which the air reaches, and a temperature in the region on the basis of the first model parameter and the second model parameter; and causing a display unit to display at least one of the wind direction, the region, and the temperature on the basis of a calculation result.

According to an eighth aspect of the present invention, a program causes a computer of a control device to execute acquiring model information of an air conditioner, acquiring space information related to a space in which the air conditioner indicated by the model information is to be installed, specifying a first model parameter related to the air conditioner indicated by the model information, specifying a second model parameter related to the space, calculating a wind direction in the space of air blown by the air conditioner indicated by the model information, a region in the space to which the air reaches, and a temperature in the region on the basis of the first model parameter and the second model parameter; and causing a display unit to display at least one of the wind direction, the region, and the temperature on the basis of a calculation result.

With the control device, the control system, the control method, and the program according to the embodiment of the present invention, it is possible to select an air conditioner suitable for a space before installing the air conditioner.

### BRIEF DESCRIPTION OF THE DRAWINGS

FIG. 1 is a diagram showing a constitution of a control system according to an embodiment of the present invention.
FIG. 2 is a diagram showing a constitution of a terminal device according to an embodiment of the present invention.
FIG. 3 is a diagram showing an example of an appearance of the terminal device according to an embodiment of the present invention.
FIG. 4 is a diagram showing an example of a space photographed by a photographing unit according to an embodiment of the present invention.
FIG. 5 is a diagram showing an example of display by a display unit according to an embodiment of the present invention.
FIG. 6 is a diagram showing a constitution of a control device according to an embodiment of the present invention.
FIG. 7 is a diagram showing a first data table in an embodiment of the present invention.
FIG. 8 is a diagram showing a second data table in an embodiment of the present invention.
FIG. 9 is a diagram showing a process flow of the control system according to an embodiment of the present invention.
FIG. 10 is a schematic block diagram showing a constitution of a computer according to at least one embodiment.

### DETAILED DESCRIPTION OF THE INVENTION

### (Embodiment)

Hereinafter, the embodiment will be described in detail with reference to the drawings.

The constitution of a control system 1 according to an embodiment of the present invention will be described.

The control system 1 according to an embodiment of the present invention is a system that virtually installs an air conditioner in a space without actually installing the designated air conditioner in the space, and in this case, calculates a wind direction in the space of air blown by the air conditioner, a region in the space to which the air reaches, and a temperature in the region, and causes a display unit to display at least one of the calculated wind direction, the region, and the temperature.

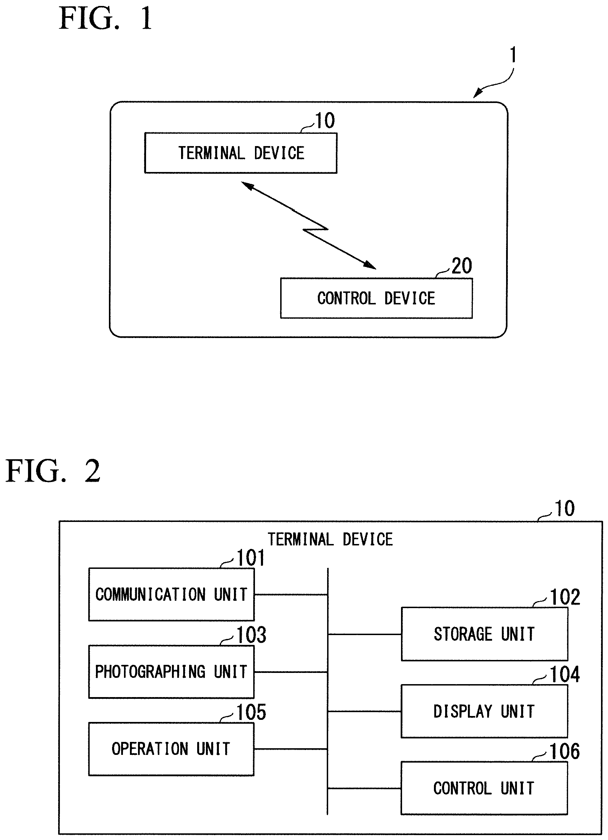

The control system 1 includes a terminal device 10 and a control device 20 as shown in FIG. 1.

The terminal device 10 includes a communication unit 101, a storage unit 102, a photographing unit 103, a display unit 104, an operation unit 105, and a control unit 106, as shown in FIG. 2. The terminal device 10 is, for example, a smartphone or a tablet terminal.

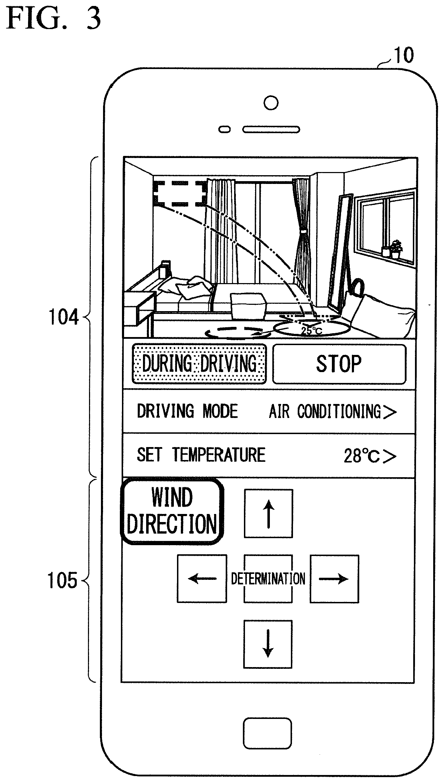

In a case in which the terminal device 10 is a smartphone, for example, the terminal device 10 has an appearance as shown in FIG. 3, and a touch panel of the smartphone is the display unit 104 and the operation unit 105.

The communication unit 101 communicates with the control device 20.

The storage unit 102 stores various pieces of information necessary for a process performed by the terminal device 10. The information stored in the storage unit 102 is, for example, a program for the control unit 106 to perform control, a program for the operation unit 105 to receive an input of information, or the like.

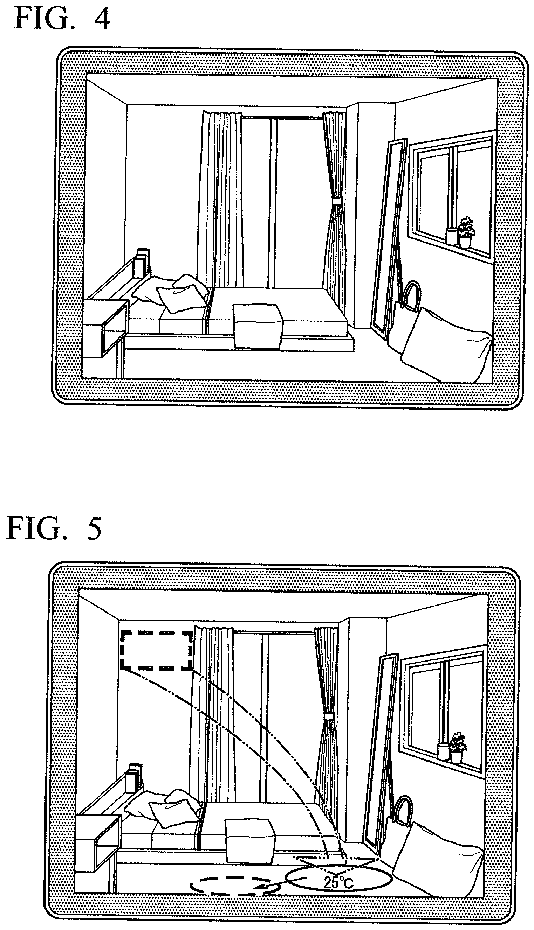

The photographing unit 103 photographs a space that falls within a photographing range of the terminal device 10. For example, the photographing unit 103 photographs a space in which an air conditioner is scheduled to be installed, as shown in FIG. 4.

The display unit 104 displays at least one of the wind direction in the space of the air blown by the air conditioner that is virtually installed in the space, the region in the space to which the air reaches, and the temperature in the region on the basis of a display instruction from the control device 20.

For example, as shown in FIG. 5, the display unit 104 displays all of the wind direction, the region, and the temperature calculated by the control device 20 in an image of the space photographed by the photographing unit 103 shown in FIG. 4. Note that a rectangular broken line shown in FIG. 5 shows a position in a case in which the air conditioner is virtually installed. In addition, an arrow shown in FIG. 5 shows the wind direction of the air blown by the air conditioner in a case in which the air conditioner is installed in the position. In addition, a round solid line shown in FIG. 5 shows the region in the space to which the air blown by the virtually installed air conditioner reaches. In addition, the temperature in the region is shown in the round solid line shown in FIG. 5.

The operation unit 105 receives an input of model information and space information. The model information is information indicating models of each air conditioner. The information indicating the model includes, for example, information indicating a model name, information indicating a function of the air conditioner, and information indicating a size of a space suitable for use of the air conditioner. In addition, the space information is information indicating a state of the space in which the air conditioner is to be installed. The information indicating the state of the space is information that affects a flow of the air blown by the air conditioner. For example, the information indicating the state of the space is information indicating the state of the space photographed by the photographing unit 103, and the information indicating the state of the space includes, for example, information indicating the size of the space including an area and a height, information of a shape of an object placed in the space, and information indicating a position of the object in the space.

For example, by executing the program stored in the storage unit 102, the model information registered in advance and the space information registered in advance are displayed on the display unit 104. In addition, the user performs an operation on the operation unit 105 to select and determine the model name of the air conditioner that is to be attempted to be virtually installed from the model information displayed on the display unit 104. The operation of selecting and determining the model name of the air conditioner is, for example, an operation of selecting the model name on the display unit 104 by touching an arrow of the operation unit 105, and confirming the selection by touching determination of the operation unit 105. In a case in which such an operation by the user is performed, the operation unit 105 writes the model information including information of the selected model name to the storage unit 102 in accordance with the operation. In addition, the user performs an operation on the operation unit 105 to select and determine the size of the space in which the virtual installation of the air conditioner is to be attempted from the space information displayed on the display unit 104. The operation of selecting and determining the size of the space is, for example, an operation of selecting the size of the space on the display unit 104 by touching the arrow of the operation unit 105, and confirming the selection by touching the determination of the operation unit 105. In a case in which such an operation by the user is performed, the operation unit 105 writes the space information including information of the size of the selected space to the storage unit 102 in accordance with the operation. As described above, the operation unit 105 performs a process in accordance with the operation by the user. That is, the operation unit 105 receives the input of the model information and the space information.

Note that the information indicating the size of the space including the area and the height, the information of the shape of the object placed in the space, the information indicating the position in the space in which the object is placed, and the like may be specified by analyzing the image of the space photographed by the photographing unit 103 and using an authentication technique or the like.

In addition, the operation unit 105 receives an input of a photographing instruction to cause the photographing unit 103 to photograph. For example, the user performs an operation on the operation unit 105 to switch the smartphone (that is, the terminal device 10) to a camera mode and take a picture. The operation unit 105 receives an imaging instruction in accordance with the operation.

The control unit 106 controls the process performed by the terminal device 10.

For example, in a case in which the operation unit 105 receives the input of the model information and the space information, the control unit 106 reads, from the storage unit 102, the model information and the space information received by the operation unit 105, that is, the model information and the space information written to the storage unit 102 by the operation unit 105. The control unit 106 transmits the read model information and the read space information to the control device 20 through the communication unit 101. In addition, for example, the control unit 106 controls the display of the display unit 104 on the basis of a display instruction from the control device 20.

In addition, for example, in a case in which the operation unit 105 receives the photographing instruction, the control unit 106 causes the photographing unit 103 to photograph the space that falls within the photographing range of the terminal device 10. In a case in which the user performs an operation of photographing the space in which the air conditioner is scheduled to be installed in a state in which the terminal device 10 is able to perform photographing, the control unit 106 causes the photographing unit 103 to photograph the space as shown in FIG. 4.

The control unit 106 writes the image photographed by the photographing unit 103, for example, to the storage unit 102. Note that the control unit 106 controls the process performed by the terminal device 10 in accordance with, for example, the program stored in the storage unit 102.

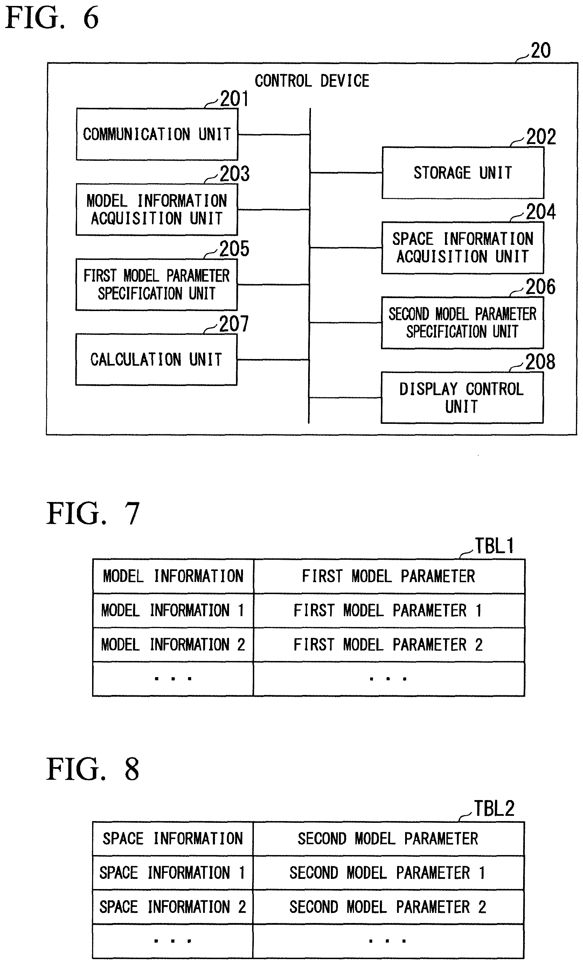

As shown in FIG. 6, the control device 20 includes a communication unit 201, a storage unit 202, a model information acquisition unit 203, a space information acquisition unit 204, a first model parameter specification unit 205, a second model parameter specification unit 206, a calculation unit 207, and a display control unit 208. The control device 20 is a device that virtually installs the air conditioner in the space without actually installing the designated air conditioner in the space, and in this case, calculates the wind direction in the space of the air blown from the air conditioner, the region in the space to which the air reaches, and the temperature in the region, and causes the display unit to display at least one of the calculated wind direction, region, and temperature.

The communication unit 201 communicates with the terminal device 10.

The storage unit 202 stores various pieces of information necessary for the process performed by the control device 20. For example, as shown in FIG. 7, the storage unit 202 stores a first data table TBL1 in which the model information and a first model parameter related to the air conditioner corresponding to the model information are associated with each other for each of pieces of the model information. The first model parameter includes information indicating an air volume according to the function of the air conditioner, information indicating the wind direction according to the function of the air conditioner, and information indicating the temperature of an outlet according to the function of the air conditioner, which are determined in advance by an experiment or the like, for each air conditioner corresponding to each piece of the model information. In addition, as shown in FIG. 8, the storage unit 202 stores a second data table TBL2 in which the space information and a second model parameter related to the space corresponding to the space information are associated with each other for each of pieces of the space information. The second model parameter includes information indicating how to change the flow of air at each position in the space, which is determined in advance by an experiment or the like, for each space indicated by the space information.

The model information acquisition unit 203 acquires the model information of the air conditioner. For example, the model information acquisition unit 203 receives, through the communication unit 201, the model information transmitted by the control unit 106 through the communication unit 101.

The model information acquisition unit 203 outputs the acquired model information of the air conditioner to a first model parameter specification unit 205.

The space information acquisition unit 204 acquires the space information related to the space in which the air conditioner indicated by the model information acquired by the model information acquisition unit 203 is to be installed. For example, the space information acquisition unit 204 receives, through the communication unit 201, the space information transmitted by the control unit 106 through the communication unit 101.

The space information acquisition unit 204 outputs the space information to the second model parameter specification unit 206.

The first model parameter specification unit 205 specifies a first model parameter related to the air conditioner indicated by the model information acquired by the model information acquisition unit 203. Specifically, the first model parameter specification unit 205 receives the model information of the air conditioner from the model information acquisition unit 203. The first model parameter specification unit 205 compares the received model information of the air conditioner with the model information of the air conditioner in the first data table TBL1. The first model parameter specification unit 205 specifies the model information of the air conditioner that is the same as the model information of the air conditioner received from the model information acquisition unit 203 in the first data table TBL1 on the basis of a comparison result.

The first model parameter specification unit 205 outputs the specified model information of the air conditioner to the calculation unit 207.

The second model parameter specification unit 206 specifies a second model parameter related to the space in which the air conditioner is virtually installed. Specifically, the second model parameter specification unit 206 receives the space information related to the space in which the air conditioner is to be installed from the space information acquisition unit 204. The second model parameter specification unit 206 compares the received space information with the space information in the second data table TBL2. The second model parameter specification unit 206 specifies the space information that is the same as the space information received from the space information acquisition unit 204 in the second data table TBL2 on the basis of a comparison result.

The second model parameter specification unit 206 outputs the specified space information to the calculation unit 207.

The calculation unit 207 calculates the wind direction in the space of the air blown by the air conditioner indicated by the model information (that is, the model information acquired by the model information acquisition unit 203) that is specified by the first model parameter specification unit 205, the region in the space to which the air reaches, and the temperature in the region on the basis of the first model parameter and the second model parameter.

The first model parameter includes the information indicating the air volume according to the function of the air conditioner, the information indicating the wind direction according to the function of the air conditioner, and the information indicating the temperature of the outlet according to the function of the air conditioner, which are determined in advance by an experiment or the like, for each air conditioner corresponding to each piece of the model information. In addition, the second model parameter includes the information indicating how to change the flow of air at each position in the space, which is determined in advance by an experiment or the like, for each space indicated by the space information. Therefore, the calculation unit 207 is able to calculate the wind direction in the space of the air blown by the air conditioner, the region in the space to which the air reaches, and the temperature in the region by using the first model parameter and the second model parameter.

The calculation unit 207 outputs a calculation result to the display control unit 208.

The display control unit 208 causes the display unit to display at least one of the wind direction in the space of the air blown by the air conditioner, the region in the space to which the air reaches, and the temperature in the region on the basis of the calculation result of the calculation unit 207.

For example, the display control unit 208 transmits the display instruction for displaying all of the wind direction in the space of the air blown by the air conditioner, the region in the space to which the air reaches, and the temperature in the region, which are the calculation results of the calculation unit 207 to the terminal device 10 through the communication unit 201. The control unit 106 receives the display instruction from the control device 20 through the communication unit 101. In accordance with the received display instruction, for example, as shown in FIG. 5, the control unit 106 causes the display unit 104 to display all of the wind direction in the space of the air blown by the air conditioner, the region in the space to which the air reaches, and the temperature in the region together with the image of the space photographed by the photographing unit 103.

Next, a process of the control system 1 according to an embodiment of the present invention will be described.

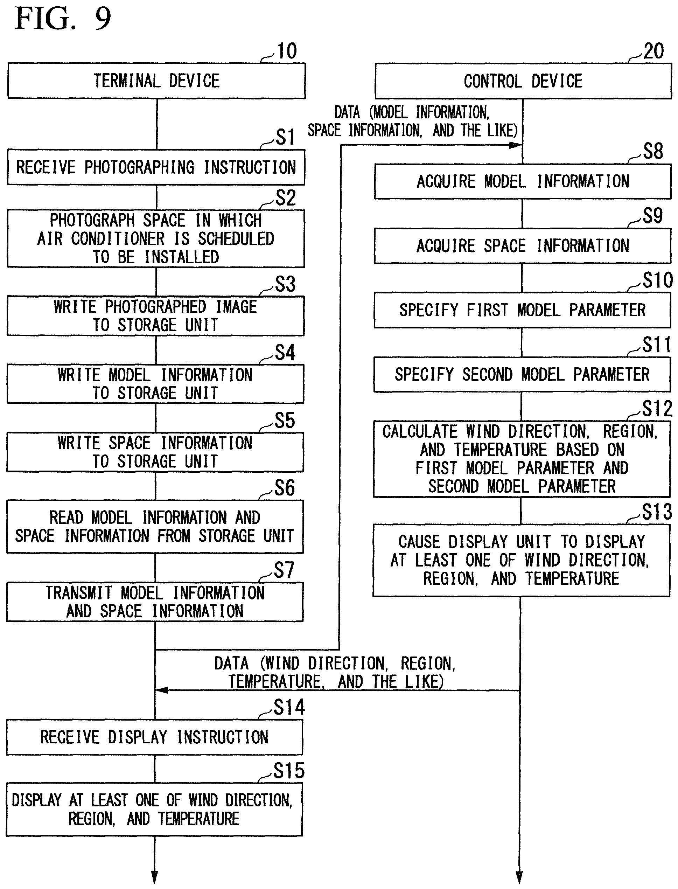

Here, a process flow of the control system 1 shown in FIG. 9 will be described.

The user performs the operation of photographing the space in which the air conditioner is scheduled to be installed in a state in which the terminal device 10 is able to perform photographing. The operation unit 105 receives the photographing instruction in accordance with the operation (step S1).

In a case in which the operation unit 105 receives the photographing instruction, the control unit 106 causes the photographing unit 103 to photograph the space in which the air conditioner is scheduled to be installed. The photographing unit 103 photographs the space in which the air conditioner is scheduled to be installed (step S2). The control unit 106 writes the image photographed by the photographing unit 103, for example, to the storage unit 102 (step S3).

The user performs the operation on the operation unit 105 to select and determine the model name of the air conditioner that is to be attempted to be virtually installed from the model information displayed on the display unit 104. The operation unit 105 writes the model information including the information of the selected model name to the storage unit 102 in accordance with the operation (step S4).

In addition, the user performs the operation on the operation unit 105 to select and determine the size of the space in which the virtual installation of the air conditioner is to be attempted from the space information displayed on the display unit 104. The operation unit 105 writes the space information including information of the size of the selected space to the storage unit 102 in accordance with the operation (step S5). Note that, in a case in which the actual space in which the air conditioner is installed is different from the space indicated by the information included in the space information, the user may select the size of the space of space information indicating the space closest to the actual space.

The control unit 106 reads, from the storage unit 102, the model information and the space information written to the storage unit 102 by the operation unit 105 (step S6). The control unit 106 transmits the read model information and the read space information to the control device 20 through the communication unit 101 (step S7).

The model information acquisition unit 203 acquires the model information of the air conditioner (step S8). For example, the model information acquisition unit 203 receives, through the communication unit 201, the model information transmitted by the control unit 106 through the communication unit 101.

The model information acquisition unit 203 outputs the acquired model information of the air conditioner to the first model parameter specification unit 205.

In addition, the space information acquisition unit 204 acquires the space information related to the space in which the air conditioner indicated by the model information acquired by the model information acquisition unit 203 is to be installed (step S9). For example, the space information acquisition unit 204 receives, through the communication unit 201, the space information transmitted by the control unit 106 through the communication unit 101.

The space information acquisition unit 204 outputs the space information to the second model parameter specification unit 206.

The first model parameter specification unit 205 specifies the first model parameter related to the air conditioner indicated by the model information acquired by the model information acquisition unit 203 (step S10). Specifically, the first model parameter specification unit 205 receives the model information of the air conditioner from the model information acquisition unit 203. The first model parameter specification unit 205 compares the received model information of the air conditioner with the model information of the air conditioner in the first data table TBL1. The first model parameter specification unit 205 specifies the model information of the air conditioner that is the same as the model information of the air conditioner received from the model information acquisition unit 203 in the first data table TBL1 on the basis of the comparison result.

The first model parameter specification unit 205 outputs the specified model information of the air conditioner to the calculation unit 207.

The second model parameter specification unit 206 specifies the second model parameter related to the space in which the air conditioner is virtually installed (step S11). Specifically, the second model parameter specification unit 206 receives the space information related to the space in which the air conditioner is to be installed from the space information acquisition unit 204. The second model parameter specification unit 206 compares the received space information with the space information in the second data table TBL2. The second model parameter specification unit 206 specifies the space information that is the same as the space information received from the space information acquisition unit 204 in the second data table TBL2 on the basis of the comparison result.

The second model parameter specification unit 206 outputs the specified space information to the calculation unit 207.

The calculation unit 207 calculates the wind direction in the space of the air blown by the air conditioner indicated by the model information that is specified by the first model parameter specification unit 205, the region in the space to which the air reaches, and the temperature in the region on the basis of the first model parameter and the second model parameter (step S12).

The calculation unit 207 outputs the calculation result to the display control unit 208.

The display control unit 208 causes the display unit to display at least one of the wind direction in the space of the air blown by the air conditioner, the region in the space to which the air reaches, and the temperature in the region on the basis of the calculation result of the calculation unit 207 (step S13).

For example, the display control unit 208 transmits the display instruction for displaying all of the wind direction in the space of the air blown by the air conditioner, the region in the space to which the air reaches, and the temperature in the region, which are the calculation results of the calculation unit 207 to the terminal device 10 through the communication unit 201.

The control unit 106 receives the display instruction from the control device 20 through the communication unit 101 (step S14). In accordance with the received display instruction, for example, as shown in FIG. 5, the control unit 106 causes the display unit 104 to display all of the wind direction in the space of the air blown by the air conditioner, the region in the space to which the air reaches, and the temperature in the region together with the image of the space photographed by the photographing unit 103.

The display unit 104 displays at least one of the wind direction in the space of the air blown by the air conditioner that is virtually installed in the space, the region in the space to which the air reaches, and the temperature in the region on the basis of the display instruction from the control device 20 (step S15).

Note that, in an embodiment of the present invention, after the selected air conditioner is actually installed in the space, the calculation unit 207 included in the control device 20 may calculate the wind direction in the space of the air of the installed air conditioner, the region in the space to which the air reaches, and the temperature in the region, and the display control unit 208 may cause the display unit 104 to display the wind direction in the space of the air, the region in the space to which the air reaches, and the temperature in the region on the basis of the calculation result.

Specifically, the model of the installed air conditioner is selected by the terminal device 10. In addition, the space closest to the actually installed space is selected by the terminal device 10. In addition, similarly to before the actual installation of the air conditioner, the calculation unit 207 calculates the wind direction in the space of the air blown by the air conditioner indicated by the model information, the region in the space to which the air reaches, and the temperature in the region on the basis of the first model parameter and the second model parameter. The display control unit 208 causes the display unit 104 to display the wind direction in the space of the air, the region in the space to which the air reaches, and the temperature in the region, which are the calculation results of the calculation unit 207.

The control system 1 according to an embodiment of the present invention has been described above.

In the control system 1 according to an embodiment of the present invention, the control device 20 includes the model information acquisition unit 203 configured to acquire the model information of the air conditioner, the space information acquisition unit 204 configured to acquire the space information related to the space in which the air conditioner indicated by the model information is to be installed, the first model parameter specification unit 205 configured to specify the first model parameter related to the air conditioner indicated by the model information, the second model parameter specification unit 206 configured to specify the second model parameter related to the space in which the air conditioner indicated by the model information is to be installed, the calculation unit 207 configured to calculate the wind direction in the space of the air blown by the air conditioner indicated by the model information, the region in the space to which the air reaches, and the temperature in the region on the basis of the first model parameter and the second model parameter, and the display control unit 208 configured to cause the display unit 104 to display at least one of the wind direction, the region, and the temperature on the basis of the calculation result of the calculation unit 207.

As described above, since the calculation unit 207 calculates the wind direction in the space of the air blown by the air conditioner indicated by the model information, the region in the space to which the air reaches, and the temperature in the region on the basis of the first model parameter and the second model parameter, the user is able to simulate a plurality of air conditioners in a plurality of spaces before installing the air conditioners, and select an air conditioner suitable for a space in which the air conditioner is scheduled to be installed.

Note that, in an embodiment of the present invention, it has been described that the display control unit 208 displays the wind direction in the space of air, the region in the space to which the air reaches, and the temperature in the region on the display unit 104 included in the terminal device 10. However, in another embodiment of the present invention, the display control unit 208 may display the wind direction in the space of air, the region in the space to which the air reaches, and the temperature in the region on an arbitrary display unit other than the terminal device 10 connected, for example, by a communication network.

Note that, in an embodiment of the present invention, it has been described that the photographing unit 103 is included in the terminal device 10. However, in another embodiment of the present invention, the photographing unit 103 may be provided in an arbitrary device as long as the photographing unit 103 is able to photograph the space in which the air conditioner is scheduled to be installed. In addition, in another embodiment of the present invention, the photographing unit 103 may be included in the air conditioner that is actually installed in the space, and the display control unit 208 may cause the display unit to display the wind direction in the space of the air, the region in the space to which the air reaches, and the temperature in the region together with the space photographed by the photographing unit 103 that is included in the air conditioner.

Note that, in an embodiment of the present invention, it has been described that the display control unit 208 causes the display unit 104 to display the wind direction in the space of the air, the region in the space to which the air reaches, and the temperature in the region together with the space photographed by the photographing unit 103. However, in another embodiment of the present invention, the display control unit 208 may cause the display unit to display the wind direction in the space of the air, the region in the space to which the air reaches, and the temperature in the region together with a virtual space prepared in advance, which is selected by the user through the terminal device 10.

Note that, in an embodiment of the present invention, it has been described that the calculation unit 207 calculates the wind direction in the space of the air blown by the air conditioner indicated by the model information (that is, the model information acquired by the model information acquisition unit 203) that is specified by the first model parameter specification unit 205, the region in the space to which the air reaches, and the temperature in the region on the basis of the first model parameter and the second model parameter. However, in another embodiment of the present invention, the terminal device 10 may perform the same operation as the calculation unit 207.

Note that the control device 20 according to another embodiment of the present invention may be included in a smartphone, a tablet terminal, or the like, and the smartphone, the tablet terminal, or the like may perform the process of the control device 20 described above. For example, a program for realizing the constitution of the control device 20 is written to a storage unit of a smartphone or a tablet terminal, and the program is executed. Therefore, a calculation unit similar to the control device 20 is able to be constituted in the smartphone or the tablet terminal, and the process of the control device 20 described above is able to be performed.

Note that the photographing unit 103 according to another embodiment of the present invention may be a photographing unit capable of photographing a stereoscopic image. In this case, the display control unit 208 may cause the display unit to display the wind direction in the space of the air, the region in the space to which the air reaches, and the temperature in the region together with a space of a three-dimensional stereoscopic image. In this case, the user is able to ascertain the flow of the air in the space in more detail.

Note that, in another embodiment of the present invention, a second model parameter for may be generated taking into account types and positions of objects that are installed in a space. The objects are, for example, furniture and lighting. A specific example of generating the second model parameter is as follows.

The objects are individually modeled. The positions of the objects are set in a space that is prepared in advance. The second model parameter is generated based on the modeled objects and the set positions of the objects. In addition, the calculation unit 207 may calculate the wind direction in the space of the air, the region in the space to which the air reaches, and the temperature in the region by using the second model parameter including the influence on the flow of the air of the disposed object.

Note that the display control unit 208 according to another embodiment of the present invention may cause the display unit to display a temperature in a region of a round broken line, for example, in a case in which the user slides the round solid line shown in FIG. 5 to a position of the round broken line.

Each of the storage unit and the storage device (including a register and a latch) in the embodiment of the present invention may be included at any place in a range in which transmission and reception of appropriate information is performed. In addition, each of a plurality of the storage units and a plurality of the storage devices may be present to store a plurality of pieces of data in a distributed manner in a range in which the transmission and reception of the appropriate information is performed.

Although the embodiment of the present invention has been described, the above-described terminal device 10, the control device 20, and other control devices may have a computer system inside. In addition, a procedure of the process described above is stored in a form of a program in a computer-readable recording medium, and the process is performed by a computer reading and executing the program. A specific example of the computer is shown below.

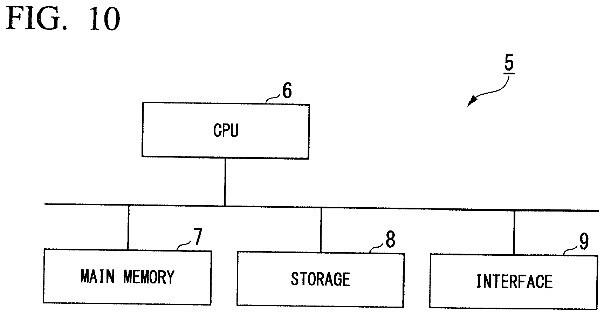

FIG. 10 is a schematic block diagram showing a constitution of a computer according to at least one embodiment.

The computer 5 includes a CPU 6, a main memory 7, a storage 8 and an interface 9, as shown in FIG 10.

For example, each of the above-described terminal device 10, the control device 20, and the other control devices is mounted in the computer 5. In addition, operations of each of the processing units described above are stored in the storage 8 in a form of a program. The CPU 6 reads the program from the storage 8, develops the program in the main memory 7, and executes the process described above in accordance with the program. In addition, the CPU 6 secures a storage region corresponding to each storage unit described above in the main memory 7 in accordance with the program.

Examples of the storage 8 include a hard disk drive (HDD), a solid state drive (SSD), a magnetic disk, an optical magnetic disk, a compact disc read only memory (CD-ROM), and a digital versatile disc read only memory (DVD-ROM), a semiconductor memory and the like. The storage 8 may be internal media that is directly connected to a bus of the computer 5 or may be external media connected to the computer 5 through an interface 9 or a communication line. In addition, in a case in which the program is distributed to the computer 5 by the communication line, the computer 5 that has received the distribution may develop the program in the main memory 7 and execute the process described above. In at least one embodiment, the storage 8 is a non-transitory tangible storage medium.

In addition, the above-described program may realize a part of the functions described above. Furthermore, the above-described program may be a file capable of realizing the function described above in combination with a program that is already recorded in a computer system, a so-called differential file (differential program).

While embodiments of the invention have been described and illustrated above, it should be understood that these are exemplary of the invention and are not to be considered as limiting. Additions, omissions, substitutions, and other modifications can be made in embodiments without departing from the spirit or scope of the present invention. Accordingly, the invention is not to be considered as being limited by the foregoing description, and is only limited by the scope of the appended claims.

## Claims

1. A control device comprising:
a model information acquisition unit configured to acquire model information indicating an air conditioner;
a space information acquisition unit configured to acquire space information related to a space in which the air conditioner indicated by the model information is to be installed;
a first model parameter specification unit configured to specify a first model parameter related to the air conditioner indicated by the model information;
a second model parameter specification unit configured to specify a second model parameter related to the space;
a calculation unit configured to calculate a wind direction in the space of air blown by the air conditioner indicated by the model information, a region in the space to which the air reaches, and a temperature in the region on the basis of the first model parameter and the second model parameter; and
a display control unit configured to cause a display unit to display at least one of the wind direction, the region, and the temperature on the basis of a calculation result of the calculation unit.

2. The control device of claim 1,
wherein the display control unit configured to cause the display unit to display at least one of the wind direction, the region, and the temperature in a state of being superimposed on an image of the space.

3. The control device of claim 1 or 2,
wherein, after the air conditioner is installed in the space,
the model information acquisition unit acquires the model information related to the installed air conditioner,
the first model parameter specification unit specifies the first model parameter of the installed air conditioner,
the calculation unit calculates the wind direction, the region, and the temperature on the basis of setting information related to an air blast set to the installed air conditioner, the first model parameter related to the installed air conditioner, and the second model parameter, and
the display control unit causes the display unit to display at least one of the wind direction, the region, and the temperature on the basis of the calculation result of the calculation unit.

4. The control system comprising:
the control device of any one of claims 1 to 3; and
a terminal device having the display unit.

5. The control system of claim 4,
wherein the terminal device includes an operation unit configured to receive an input of the model information and the space information,
the model information acquisition unit acquires the model information received by the operation unit, and
the space information acquisition unit acquires the space information received by the operation unit.

6. The control system of claim 5,
wherein the operation unit receives an input of the setting information related to the air blast set to the installed air conditioner, after the air conditioner is installed in the space, and
the calculation unit calculates the wind direction, the region, and the temperature on the basis of the setting information received by the operation unit, the first model parameter related to the installed air conditioner, and the second model parameter.

7. A control method comprising:
acquiring model information indicating an air conditioner;
acquiring space information related to a space in which the air conditioner indicated by the model information is to be installed;
specifying a first model parameter related to the air conditioner indicated by the model information;
specifying a second model parameter related to the space;
calculating a wind direction in the space of air blown by the air conditioner indicated by the model information, a region in the space to which the air reaches, and a temperature in the region on the basis of the first model parameter and the second model parameter; and
causing a display unit to display at least one of the wind direction, the region, and the temperature on the basis of a calculation result.

8. A program causing a computer of a control device to execute:
acquiring model information indicating an air conditioner;
acquiring space information related to a space in which the air conditioner indicated by the model information is to be installed;
specifying a first model parameter related to the air conditioner indicated by the model information;
specifying a second model parameter related to the space;
calculating a wind direction in the space of air blown by the air conditioner indicated by the model information, a region in the space to which the air reaches, and a temperature in the region on the basis of the first model parameter and the second model parameter; and
causing a display unit to display at least one of the wind direction, the region, and the temperature on the basis of a calculation result.
